# FASCICULE DE BREVET EUROPEEN

(11) **EP 1 503 541 B1**
(45) Date de publication et mention de la délivrance du brevet: **19.03.2008**
(21) Numéro de dépôt: 04291814.4
(22) Date de dépôt: 15.07.2004
(51) Int. Cl.: H04L 12/24

(54) **Procédé et dispositif pour la mémorisation configurable de données d'équipements dans un systéme de gestion de réseau**
Verfahren und Vorrichtung für konfigurierbares Speichern von Netzelementendaten in einem Netzverwaltungssystem
Method and device for configurable storing of network elements' data in a network management system

(30) Priorité: 01.08.2003 FR 0309511
(43) Date de publication de la demande: 02.02.2005
(73) Titulaire: Alcatel Lucent, 75008 Paris (FR)
(72) Inventeur: Bergeot, Patrick, 92160 Antony (FR); Lapraye, Bertrand, 91190 Gif sur Yvette (FR); Villeret, Pascal, 92140 Clamart (FR); Chevanne, Michel, 92140 Clamart (FR)
(74) Mandataire: Chaffraix, Sylvain

(56) Documents cités:
- EP-A- 0 624 964
- US-A- 5 870 749
- DISTRIBUTED MANAGEMENT TASK FORCE, INC.: "COMMON INFORMATION MODEL CIM SPECIFICATION V.2.2" DTMF, INC., 14 juin 1999 (1999-06-14), XP002278401
- JAE-WON CHOI ET AL: "A web-based management system for network monitoring" IP OPERATIONS AND MANAGEMENT, 29 octobre 2002 (2002-10-29), pages 98-102, XP010611955

## Description

L'invention concerne le domaine de la gestion d'équipements (ou éléments) d'un réseau de communications par un système de gestion de réseau (ou NMS pour « Network Management System »).

On entend ici par « équipement de réseau» tout type de matériel, comme par exemple des serveurs, des terminaux, des commutateurs, des routeurs ou des concentrateurs, capable d'échanger des données, notamment de gestion, selon un protocole de gestion de réseau avec le système de gestion NMS de son réseau d'appartenance. Le protocole de gestion de réseau peut être par exemple le protocole SNMP (pour « Simple Network Management Protocol » RFC 2571-2580) utilisé notamment dans les réseaux de type ADSL, le protocole TL1 utilisé notamment dans les réseaux de type SONET, le protocole Q3 utilisé notamment dans les réseaux de type SDH, ou encore les protocoles CLI et CORBA.

Par ailleurs, on entend ici par « système de gestion de réseau », un système d'exploitation de réseau permettant à son gestionnaire (ou superviseur) de gérer les équipements (ou éléments) de réseau qui le constituent, et qui sont incapables de le faire eux-mêmes. Un tel système de gestion NMS intègre, ou est couplé à, des outils mettant en oeuvre des fonctions et des services, également appelés OAM&P (pour « Operations, Administration, Maintenance and Provisioning »). Parmi ces outils, on peut notamment citer le système de gestion d'équipements (ou EMS pour « Element Management System ») chargé d'assurer l'interface de dialogue entre les équipements de réseau et le système de gestion NMS.

Ces systèmes de gestion d'équipements EMS génèrent des données d'information (primaires), relatives aux différents équipements de réseau, qui, pour certaines, doivent parfois être mémorisées de façon persistante (ou durable). Cette mémorisation (également appelée persistance) s'effectue, selon la configuration du système de gestion d'équipements EMS, soit dans des fichiers plats, soit dans une base de données, telle qu'Oracle ou Informix, qui est généralement la même que celle utilisée par le système de gestion NMS.

En raison de l'hétérogénéité toujours croissante des équipements de réseau et des protocoles de gestion associés, les données (primaires) d'équipements sont hétérogènes et correspondent à des modèles de persistance différents adaptés à des media de mémorisation différents, voir, par exemple, la demande de brevet américaine US 5870749.

Le mécanisme de persistance des systèmes de gestion d'équipements EMS étant généralement codé en dur de manière à être adapté à un unique type de medium de mémorisation, il n'est donc pas bien adapté à la situation actuelle.

L'invention a donc pour but de remédier à cet inconvénient.

Elle propose à cet effet un dispositif de gestion de persistance de données pour un système de gestion d'équipements (EMS) d'un réseau de communications comportant une multiplicité d'équipements de réseau, ledit système de gestion d'équipements (EMS) étant couplé aux équipements et à un système de gestion de réseau (NMS) et comprenant un arbre d'informations de gestion (ou MIT pour « Management Information Tree »), couplé au dispositif, représentatif de liens entre équipements et comportant des données primaires.

Ce dispositif de gestion se caractérise par le fait qu'il comprend des moyens de transformation configurables chargés de transformer certaines au moins des données primaires de l'arbre d'informations de gestion en données persistantes en fonction de modèles de persistance associés chacun à des moyens (ou media) de mémorisation différents (par exemple de type fichiers plats et/ou base de données, éventuellement de type relationnel), en vue de leur mémorisation dans le moyen de mémorisation qui est associé au modèle de persistance qui a servi à leur transformation.

Il est important de noter que l'on peut utiliser soit plusieurs modèles de persistance indépendants les uns des autres, soit plusieurs modèles de persistance constituants des parties d'un unique « méta modèle de persistance ».

Préférentiellement, les moyens de transformation sont chargés de déterminer tout d'abord l'appartenance des données primaires à différents ensembles de persistance choisis, associés aux différents modèles de persistance, puis de transformer ces données primaires en données persistantes en fonction du modèle de persistance associé à l'ensemble de persistance auquel elles appartiennent.

Le dispositif selon l'invention peut comporter d'autres caractéristiques qui pourront être prises séparément ou en combinaison, et notamment :
- il peut être contrôlé par des moyens de description d'équipements (MEM) du système de gestion d'équipements (EMS), comprenant par exemple des descripteurs (modules informatiques contenant toutes les données nécessaires à la gestion par le système de gestion NMS d'au moins un élément d'équipement),
- des moyens de transformation agencés de manière à transformer les données primaires en données persistantes en générant des tables de données au format du moyen (ou medium) de mémorisation correspondant,
- des moyens de transformation chargés, une fois qu'ils ont procédé à une transformation de données primaires en données persistantes, de générer une interface de stockage, par exemple de type JDBC, adaptée au stockage des données persistantes dans le moyen (ou medium) de mémorisation correspondant,
- des données primaires définissant des objets, et des ensembles de persistance définissant des classes d'objets,
- des moyens de transformation constitués d'au moins un fichier de configuration, par exemple de type XML, et d'au moins un fichier de codes de programme, par exemple en langage Java.

L'invention propose également un système de gestion d'équipements (EMS), pour un réseau de communications comportant une multiplicité d'équipements de réseau, et destiné à être couplé à ces équipements et à un système de gestion de réseau (NMS), et comprenant un arbre d'informations de gestion (MIT) couplé à un dispositif de gestion du type de celui présenté ci-avant.

L'invention propose également un serveur de gestion, d'un système de gestion de réseau (NMS), et un équipement de réseau équipés chacun d'un système de gestion d'équipements (EMS) du type de celui présenté ci-dessus.

L'invention porte en outre sur un procédé de gestion de persistance de données pour un réseau de communications comportant une multiplicité d'équipements de réseau couplés à un système de gestion d'équipements (EMS), lui-même couplé à un système de gestion de réseau (NMS) et comprenant un arbre d'informations de gestion (MIT).

Ce procédé se caractérise par le fait qu'il consiste à transformer certaines au moins des données primaires en données persistantes en fonction de modèles de persistance associés chacun à des moyens (ou media) de mémorisation différents (tels que des fichiers plats et une base de données, éventuellement de type relationnel), en vue de leur mémorisation dans le moyen de mémorisation qui est associé au modèle de persistance qui a servi à leur transformation.

Préférentiellement, on détermine l'appartenance des données primaires à des ensembles de persistance choisis, associés aux différents modèles de persistance, puis on transforme ces données primaires en données persistantes en fonction du modèle de persistance qui est associé à l'ensemble de persistance auquel elles appartiennent.

Egalement de préférence, on transforme les données primaires en données persistantes en générant des tables de données au format du moyen (ou medium) de mémorisation correspondant.

Par ailleurs, après avoir procédé à une transformation de données primaires en données persistantes, il est particulièrement avantageux de générer une interface de stockage, par exemple de type JDBC, adaptée au stockage des données persistantes dans le moyen (ou medium) de mémorisation correspondant.

L'invention peut notamment être mise en oeuvre dans toutes les technologies réseaux qui doivent être gérées, et notamment dans les réseaux de transmission (par exemple de type WDM, SONET, SDH), les réseaux de données (par exemple de type Internet-IP ou ATM) ou les réseaux de voix (par exemple de type classique, mobile ou NGN).

D'autres caractéristiques et avantages de l'invention apparaîtront à l'examen de la description détaillée ci-après, et des dessins annexés, sur lesquels :
- la figure 1 illustre de façon schématique un exemple de réseau de communications équipé d'un système de gestion d'équipements (EMS) selon l'invention, implanté dans un serveur de gestion, et
- la figure 2 illustre de façon schématique un exemple de réalisation d'un dispositif de gestion selon l'invention, implanté dans un module de traitement (MT) d'un système de gestion d'équipements (EMS).

Les dessins annexés pourront non seulement servir à compléter l'invention, mais aussi contribuer à sa définition, le cas échéant.

L'invention a pour objet de permettre la gestion de la persistance de données (primaires) d'équipements de réseau au sein d'un système de gestion d'équipements (EMS) d'un réseau de communications.

Dans ce qui suit on considère, à titre d'exemple illustratif, que le réseau de communications est au moins en partie de type Internet (IP). Mais, l'invention s'applique à d'autres types de réseau, comme par exemple aux réseaux de transmission de type WDM, SONET ou SDH, aux réseaux de données de type ATM, ou aux réseaux de voix de type classique, mobile ou NGN.

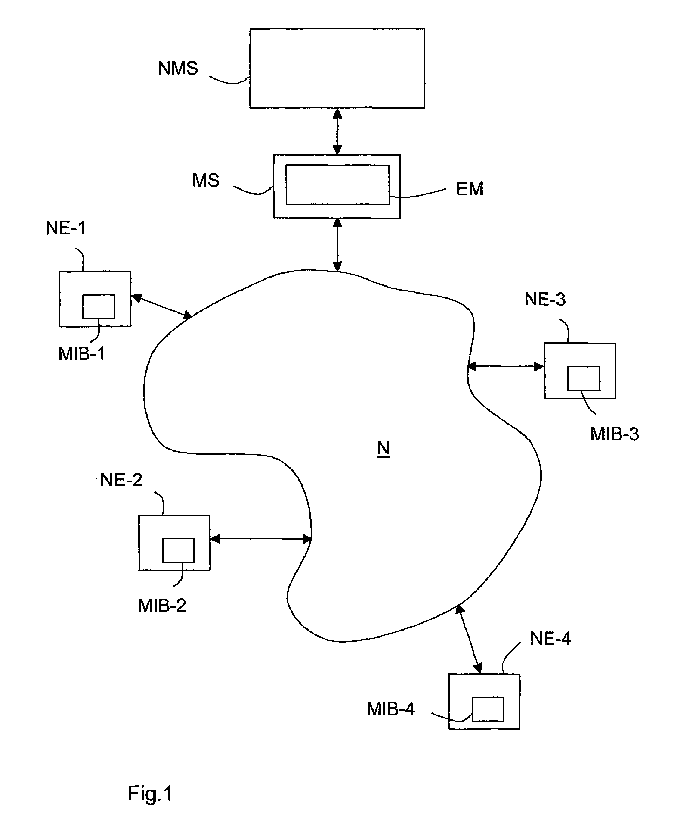

Comme cela est illustré sur la figure 1, un réseau de communications N est, de façon très schématique, constitué d'une multiplicité d'équipements (ou éléments) de réseau NE-i (ici i = 1 à 4, à titre d'exemple), reliés les uns aux autres par des moyens de communications et raccordés, au moins pour certains d'entre eux, à un système de gestion de réseau (ou NMS pour « Network Management System »), via un serveur de gestion MS. Comme indiqué dans la partie introductive, le système de gestion de réseau NMS est destiné à permettre au gestionnaire (ou superviseur) du réseau de gérer et contrôler à distance les équipements NE-i auxquels il est couplé.

On entend ici par « équipement de réseau » NE-i un matériel capable d'échanger des données de gestion avec le serveur de gestion MS, selon un protocole de gestion choisi, comme par exemple le protocole SNMP (pour « Simple Network Management Protocol » RFC 2571-2580), ou les protocoles TL1, CORBA, CLI ou Q3. Il s'agit, par exemple, de serveurs périphériques ou de coeur, de terminaux, de commutateurs, de routeurs ou de concentrateurs.

Le serveur de gestion MS est ici équipé d'un système de gestion d'équipements (ou EMS pour « Element Management System ») chargé d'assurer l'interface de dialogue entre les équipements de réseau et le système de gestion NMS, et générant des données d'informations, dites primaires, relatives aux équipements du réseau NE-i.

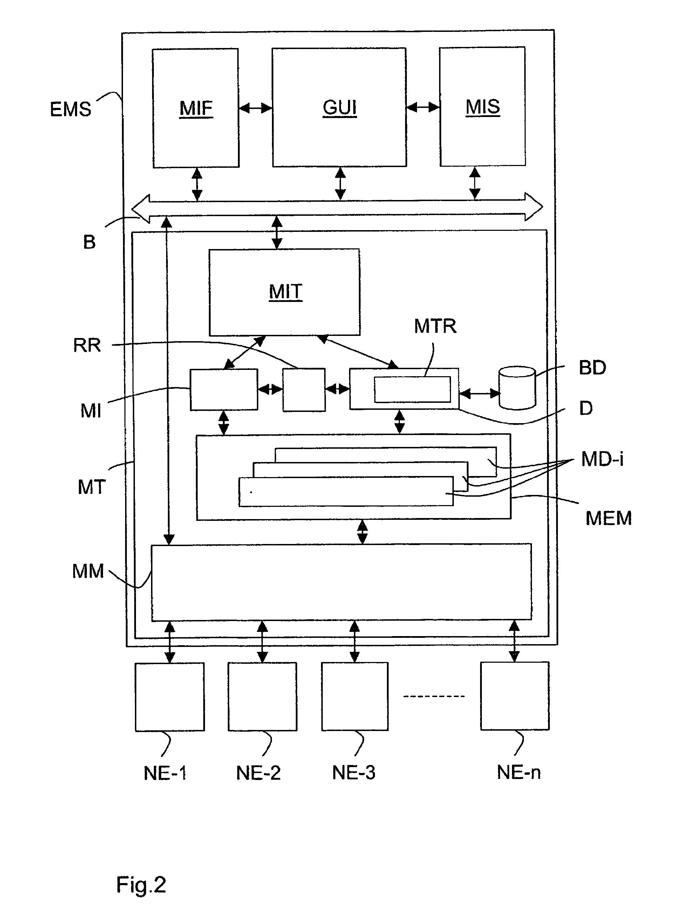

Comme cela est illustré sur la figure 2, un système de gestion d'équipements EMS comprend un module de traitement MT couplé, via un bus B, de préférence de type CORBA, à un module d'interface graphique, par exemple de type GUI (pour « Graphical User Interface »), et à un module d'interface fonctionnelle MIF et un module d'interface système MIS. Le module d'interface système MIS et le module d'interface fonctionnelle MIF sont par ailleurs couplés au GUI ainsi qu'au système de gestion de réseau (NMS).

Le module d'interface graphique GUI, et/ou le module d'interface fonctionnelle MIF et/ou le module d'interface système MIS peuvent ne pas être localisés au même endroit que le reste du système de gestion d'équipements EMS. Le module de traitement MT (également connu sous l'acronyme anglais EMA) peut en effet être implanté dans un serveur de gestion MS ou dans un équipement de réseau NE-i, tandis que le module d'interface graphique GUI peut être implanté dans le système de gestion de réseau NMS.

Le module de traitement MT comporte un module de médiation MM, chargé de faire dialoguer entre elles les interfaces du réseau (et notamment celles des équipements) et couplé, d'une part, à un arbre d'informations de gestion MIT, et d'autre part, à une mémoire MEM dans laquelle sont stockés des descripteurs MD-i associés chacun à au moins un élément d'un équipement NE-i, comme par exemple une carte à circuits intégrés ou une interface de connexion, et désignant notamment le protocole d'échange associé audit élément.

Un descripteur est un module informatique qui contient toutes les données nécessaires à la gestion par le système de gestion NMS d'au moins un élément d'équipement NE-i. Chaque descripteur dédié MD-i est préférentiellement constitué de fichiers de codes de programmes, de préférence en langage Java et permettant de discuter avec une interface d'équipement, d'un fichier contenant des données désignant un type d'équipement, d'un fichier contenant des données qui désignent une définition de base d'informations de gestion, ou définition de MIB (« Management Information Base »), stockée dans le système de gestion NMS ou dans le module de traitement MT et associée à la base d'information de gestion MIB-i de l'équipement NE-i du type considéré, et de fichiers de configuration, par exemple de type XML, qui contiennent des informations permettant de gérer un type d'équipement du réseau.

Le module de médiation MM est principalement chargé de la gestion des alarmes et des événements, et permet au système de gestion NMS d'administrer les équipements NE-i avec l'assistance du module d'interface fonctionnelle MIF et du module d'interface système MIS. La gestion des alarmes et événements permet au système de gestion NMS de récupérer les données d'informations représentatives de l'état de fonctionnement des équipements, et notamment des alarmes et des comptes rendus d'événements survenus dans les équipements NE-i, afin d'en assurer la gestion (par exemple en déclenchant des actions adaptées).

Préférentiellement, le module de traitement MT, et notamment son module de médiation MM, est réalisé sous la forme de modules logiciels ou informatiques (ou « software »), c'est-à-dire sous la forme de fichiers de codes de programme. Plus préférentiellement encore, ces fichiers de codes de programmes sont en langage Java. Encore plus préférentiellement, les codes de programmes satisfont aux recommandations CVM (pour « C Virtual Machine », la lettre C désignant à la fois le mot « compact », le mot « connected », l'expression « consume-oriented » et le langage C), afin de permettre au dispositif son implantation dans un équipement de réseau, y compris dans un ordinateur portable.

Mais, bien entendu, le module de traitement MT pourrait être réalisé sous la forme d'une combinaison de circuits électroniques (ou « hardware ») et de modules logiciels.

Le module d'interface fonctionnelle MIF est plus particulièrement chargé de l'échange d'informations tant avec le système de gestion NMS qu'avec les équipements de réseau NE-i, via le module de traitement MT, et notamment son module de médiation MM. Il est notamment chargé de récupérer, compte tenu des données de description contenues dans les descripteurs MD-i, via le module de traitement MT, des informations provenant des équipements NE-i du réseau, comme par exemple des alarmes et des événements, pour les communiquer au système de gestion NMS afin qu'il administre et gère lesdits équipements.

Certaines informations pouvant être récupérées de façon automatique, le module de traitement MT comporte un module d'interrogation (ou « polling ») MI, couplé à l'arbre d'informations de gestion MIT et à la mémoire MEM, et chargé d'interroger, de préférence de façon cyclique, des équipements (passifs) qui ne fournissent pas spontanément les informations représentatives de leur état de fonctionnement. Ce module d'interrogation MI peut être en outre couplé à une mémoire de type « registration repository » RR. Un tel module MI est notamment utile dans les réseaux d'accès comportant de nombreux équipements, et dans les réseaux passifs.

Le module d'interface système MIS est plus particulièrement chargé de l'organisation du dialogue entre le système de gestion NMS et le système de gestion d'équipements EMS.

Le module d'interface système MIS comprend une interface de persistance (ou « persistency interface »), notamment chargée de gérer la mémorisation de données d'informations (ou profils) de gestion, ici appelées données primaires, extrait(e)s de la table d'informations de gestion MIT et concernant des équipements NE-i associés à certains niveaux de priorité ou des contextes particuliers définis par des politiques de persistance. Ces données primaires sont préférentiellement stockées dans des media de mémorisation, internes au système de gestion d'équipement EMS ou externes à celui-ci. Dans l'exemple illustré, les media de mémorisation se présentent sous la forme d'une base de données BD, par exemple de type relationnel (RDBMS). Mais, il pourrait s'agir de plusieurs bases de données différentes ou de fichiers plats (ou « flat files ») FP.

Selon l'invention, la mémorisation de ces données primaires s'effectue à l'aide d'un dispositif de gestion de persistance D, également appelé « MIT persistency tool ».

Plus précisément, le dispositif D selon l'invention est destiné à permettre la gestion dynamique de la persistance de données (primaires) d'équipements du réseau NE-i.

Il comporte à cet effet un module de transformation MTR, configurable, chargé de transformer sur ordre certaines au moins des données primaires que contient l'arbre d'informations de gestion MIT en données persistantes au format d'un medium de mémorisation.

Cette transformation s'effectue plus précisément en fonction de modèles de persistance qui sont associés chacun à l'un des media (FP ou BD). Elle est préférentiellement contrôlée par le descripteur MD-i qui a été chargé (ou activé), à un instant donné, par le module de médiation MM sur ordre du système de gestion NMS.

Pour mener à bien cette transformation, le module de transformation MTR commence par analyser les données primaires qu'il reçoit afin de déterminer le modèle de persistance qui leur correspond et donc le medium FP ou BD dans lequel elles doivent être stockées.

Préférentiellement, les données primaires, qui sont généralement des objets (au sens informatique du terme), peuvent être regroupées dans des ensembles, ou classes d'objets, associés chacun à un modèle de persistance. Dans la pratique, il est préférable de ne prévoir qu'un unique modèle de persistance (ou « méta modèle ») subdivisé en parties dédiées chacune à une classe d'objets. Par exemple, chaque partie se présente sous la forme d'une table au format du medium de mémorisation et dont chaque colonne est dédiée à l'un des attributs de la classe d'objets correspondante. Le module de transformation MTR est donc configuré de manière à reconnaître l'ensemble auquel appartiennent des données (ou objets) primaires reçu(e)s.

A cet effet, trois cas peuvent être envisagés. Dans un premier cas, les données (ou objets) primaires sont accompagné(e)s d'un identifiant représentatif de leur classe d'appartenance. Le module de transformation MTR n'a donc besoin que d'une table de correspondance entre les identifiants de classe et les parties du modèle de persistance (ou les modèles de persistance) pour déterminer la partie du modèle de persistance (ou le modèle de persistance) à appliquer aux objets primaires reçus.

Dans un second cas, les objets primaires sont bruts (ou dépourvus d'identifiant de classe). Le module de transformation MTR a donc besoin, par exemple, d'une première table de correspondance entre des objets primaires et des identifiants de classe et d'une seconde table de correspondance entre les identifiants de classe et les parties du modèle de persistance (ou les modèles de persistance), afin de déterminer la partie du modèle de persistance (ou le modèle de persistance) à appliquer aux objets primaires reçus. Ces deux tables peuvent être confondues en une unique table à entrées multiples. En variante, on peut utiliser une unique table de correspondance entre les objets primaires et les parties du modèle de persistance (ou les modèles de persistance).

Dans un troisième cas, l'un des descripteurs MD-i assure la correspondance (ou « mapping ») entre le modèle de persistance interne du module de transformation MTR, et le modèle externe du medium de mémorisation. Par conséquent, le module de transformation MTR sait automatiquement quelle partie de modèle de persistance (ou quel modèle de persistance) il doit appliquer aux objets primaires qu'il reçoit.

Une fois qu'une partie de modèle de persistance (ou un modèle de persistance ou encore un medium de mémorisation) a été déterminé(e), le module de transformation n'a plus qu'à transformer (ou convertir) les objets primaires en objets persistants au format du medium de mémorisation FP ou BD qui est associé à ladite partie du modèle de persistance (ou audit modèle de persistance).

La transformation consiste par exemple à générer des tables de données au format du medium de mémorisation FP ou BD choisi. Lorsque les données sont des objets, les colonnes des tables sont alors remplies par les attributs (persistants) des objets primaires à « persister ».

Par exemple dans le cas d'une base de données de type MySQL les tables sont de type SQL.

Par ailleurs, dans le cas d'une base de données relationnelle la transformation établit le lien entre l'objet à persister, défini de façon absolue (c'est-à-dire dans une version dite FDN pour « Full Distinguish Name »), et la clé de la base de données relationnelle.

En outre, lorsque le module de transformation MTR a fini sa transformation de données primaires en données persistantes, il est avantageux qu'il génère une interface de stockage adaptée au stockage des données persistantes dans le medium de mémorisation correspondant.

Préférentiellement, cette interface de stockage est de type JDBC. Ce type d'interface est particulièrement intéressant dans la mesure où il permet une compatibilité avec tout type de base de données BD et de fichier plat FP. En d'autres termes, en utilisant une interface JDBC, on rend le dispositif D selon l'invention indépendant du medium de mémorisation utilisé.

Les données (ou objets) persistants sont ensuite transmis au medium de mémorisation choisi (FP ou BD) en vue de leur mémorisation selon la partie du modèle de persistance (ou le modèle de persistance) choisi(e).

Le module de transformation MTR est préférentiellement constitué de fichiers de configuration et de fichiers de codes de programme, par exemple en langage Java.

Chaque fichier de configuration est avantageusement de type XML. Ce langage de programmation est en effet particulièrement convivial et facile d'utilisation. Par ailleurs, les fichiers de codes de programmes sont avantageusement en langage Java, en raison de l'aptitude de ce langage à charger et décharger de façon dynamique des codes informatiques.

La constitution du module de transformation MTR s'effectue par exemple de la façon suivante. On commence tout d'abord par définir ce que l'on veut persister. Pour ce faire, on définit par exemple des classes d'objets primaires (délivrés par le MIT) et l'on associe à chaque classe d'objets une partie d'un modèle de persistance (ou un modèle de persistance).

On définit ensuite des fonctions internes enrichies par du code (ou « object factories »), et destinées à construire les différentes classes précédemment définies. Ces fonctions sont ensuite préférentiellement stockées dans une partie dédiée de la mémoire de type registration repository RR.

Puis, on définit comment on veut persister les données (ou objets) de chaque ensemble (ou classe). Pour ce faire, on associe à chaque partie du modèle de persistance (ou à chaque modèle de persistance) un medium de mémorisation (éventuellement le même). Un modèle de persistance est un fichier de configuration, par exemple XML, qui définit des règles permettant la transformation des objets d'une classe en objets persistants au format du medium de mémorisation correspondant. En d'autres termes, il définit un nombre de tables de stockage de données et des relations entre ces tables. Enfin, on définit les paramètres de chaque interface (JDBC) qui permettra le transfert des données (ou objets) persistants, définis de façon absolue, vers le medium de mémorisation correspondant.

L'invention offre également un procédé de gestion de persistance de données (ou objets) pour un réseau de communications N comportant une multiplicité d'équipements de réseau NE-i couplés à un système de gestion d'équipements EMS, lui-même couplé à un système de gestion de réseau NMS et comprenant un arbre d'informations de gestion MIT.

Celui-ci peut être notamment mis en oeuvre à l'aide du dispositif de gestion D et du système de gestion d'équipements EMS présentés ci-avant. Les fonctions et sous-fonctions principales et optionnelles assurées par les étapes de ce procédé étant sensiblement identiques à celles assurées par les différents moyens constituant le dispositif de gestion D et/ou le système de gestion d'équipements EMS, seules seront résumées ci-après les étapes mettant en oeuvre les fonctions principales du procédé selon l'invention.

Ce procédé consiste à transformer certaines au moins des données (ou objets) primaires en données (ou objets) persistant(e)s en fonction de modèles de persistance associés chacun à des moyens (ou media) de mémorisation différents (tels que des fichiers plats FP et une base de données BD, éventuellement de type relationnel), en vue de leur mémorisation dans le moyen de mémorisation qui est associé au modèle de persistance qui a servi à leur transformation.

Préférentiellement, on détermine l'appartenance des données (ou objets) primaires à des ensembles de persistance (ou classes d'objets) choisi(e)s, associé(e)s aux différents modèles de persistance, puis on transforme ces données primaires en données persistantes en fonction du modèle de persistance qui est associé à l'ensemble de persistance auquel elles appartiennent.

L'invention ne se limite pas aux modes de réalisation de dispositif de gestion de persistance D, de système de gestion d'équipements EMS, de serveur de gestion MS et de procédé de gestion de persistance décrits ci-avant, seulement à titre d'exemple, mais elle englobe toutes les variantes que pourra envisager l'homme de l'art dans le cadre des revendications ci-après.

Ainsi, on a décrit un système de gestion d'équipements EMS implanté dans un serveur de gestion d'un système de gestion de réseau (NMS). Mais, le système de gestion d'équipements EMS pourrait être implanté dans un équipement de réseau ou bien dans un terminal dédié à la gestion locale d'équipement(s), également appelé « craft terminal ».

## Revendications

1. Dispositif (D) de gestion de persistance de données pour un système de gestion d'équipements (EMS) d'un réseau de communications (N) comportant une multiplicité d'équipements de réseau (NE-i), ledit système de gestion d'équipements (EMS) étant couplé auxdits équipements (NE-i) et à un système de gestion de réseau (NMS) et comprenant un arbre d'informations de gestion (MIT), couplé audit dispositif (D), représentatif de liens entre équipements (NE-i) et comportant des données primaires, **caractérisé en ce qu**'il comprend des moyens de transformation (MTR) configurables, agencés pour transformer certaines au moins desdites données primaires en données persistantes en fonction de modèles de persistance associés chacun à des moyens de mémorisation différents (FP, BD), et en ce que lesdits moyens de transformation (MTR) sont agencés, après avoir procédé à une transformation de données primaires en données persistantes, pour générer une interface de stockage adaptée au stockage desdites données persistantes dans le moyen de mémorisation correspondant (FP, BD).

2. Dispositif selon la revendication 1, **caractérisé en ce que** lesdits moyens de transformation (MTR) sont agencés pour déterminer l'appartenance desdites données primaires à des ensembles de persistance choisis associés aux différents modèles de persistance, puis pour transformer ces données primaires en données persistantes en fonction du modèle de persistance associé à l'ensemble de persistance auquel elles appartiennent.

3. Dispositif selon l'une des revendications 1 et 2, **caractérisé en ce qu**'il est propre à être contrôlé par des moyens de description d'équipements (MEM) dudit système de gestion d'équipements (EMS).

4. Dispositif selon l'une des revendications 1 à 3, **caractérisé en ce que** lesdits moyens de transformation (MTR) sont agencés pour transformer lesdites données primaires en données persistantes par génération de tables de données au format du moyen de mémorisation correspondant (FP BD).

5. Dispositif selon l'une des revendications 1 à 4, **caractérisé en ce que** ladite interface de stockage est de type JDBC.

6. Dispositif selon l'une des revendications 1 à 5, **caractérisé en ce que** lesdits moyens de transformation (MTR) sont agencés pour délivrer des données persistantes adaptées à des moyens de mémorisation choisis dans un groupe comprenant au moins les fichiers plats (FP) et les bases de données (BD).

7. Dispositif selon la revendication 6, **caractérisé en ce que** l'une au moins des bases de données (BD) est de type relationnel.

8. Dispositif selon l'une des revendications 1 à 7, **caractérisé en ce que** lesdites données primaires définissent des objets, et **en ce que** lesdits ensembles de persistance sont des classes d'objets.

9. Dispositif selon l'une des revendications 1 à 8, **caractérisé en ce que** lesdits moyens de transformation (MTR) comportent au moins un fichier de configuration et au moins un fichier de codes de programme.

10. Dispositif selon la revendication 9, **caractérisé en ce que** chaque fichier de configuration est de type XML.

11. Dispositif selon l'une des revendications 9 et 10, **caractérisé en ce que** lesdits codes de programme sont en langage Java.

12. Système de gestion d'équipements (EMS), pour un réseau de communications (N) comportant une multiplicité d'équipements de réseau (NE-i), et propre à être couplé auxdits équipements (NE-i) et à un système de gestion de réseau (NMS) et comprenant un arbre d'informations de gestion (MIT) représentatif de liens entre équipements et comportant des données primaires, **caractérisé en ce qu'**il comprend un dispositif de gestion (D) selon l'une des revendications 1 à 11 précédentes, couplé audit arbre d'informations de gestion (MIT) et à des moyens de description d'équipements (MEM).

13. Serveur de gestion (MS) d'un système de gestion de réseau (NMS), **caractérisé en ce qu**'il comprend un système de gestion d'équipements (EMS) selon la revendication 12.

14. Equipement de réseau (NE-i), **caractérisé en ce qu**'il comprend un système de gestion d'équipements (EMS) selon la revendication 12.

15. Procédé de gestion de persistance de données pour un réseau de communications (N) comportant une multiplicité d'équipements de réseau (NE-ij), et un système de gestion de réseau (NMS) couplé à un système de gestion d'équipements (EMS) couplé auxdits équipements (NE-i), représentatif de liens entre équipements et comprenant un arbre d'informations de gestion (MIT) comportant des données primaires, **caractérisé en ce qu**'il consiste à transformer certaines au moins desdites données primaires en données transformer certaines au moins desdites données primaires en données persistantes en fonction de modèles de persistance associés chacun à des moyens de mémorisation différents (FP, BD), en vue de leur mémorisation dans le moyen de mémorisation associé au modèle de persistance ayant servi à leur transformation et en ce qu'après avoir procédé à une transformation de données primaires en données persistantes, on génère une interface de stockage adaptée au stockage desdites données persistantes dans le moyen de mémorisation correspondant (FP, BD).

16. Procédé selon la revendication 15, **caractérisé en ce que** l'on détermine l'appartenance desdites données primaires à des ensembles de persistance choisis associés aux différents modèles de persistance, puis on transforme ces données primaires en données persistantes en fonction du modèle de persistance associé à l'ensemble de persistance auquel elles appartiennent.

17. Procédé selon l'une des revendications 15 et 16, **caractérisé en ce que** l'on transforme lesdites données primaires en données persistantes par génération de tables de données au format du moyen de mémorisation correspondant.

18. procédé selon la revendication 15, **caractérisé en ce que** l'on génère une interface de stockage de type JDBC.

19. Procédé selon l'une des revendications 15 a 18 **caractérisé en ce que** l'on délivre des données persistantes adaptées à des moyens de mémorisation choisis dans un groupe comprenant au moins les fichiers plats (FP) et les bases de données (BD).

20. Procédé selon la revendication 19, **caractérisé en ce que** l'une au moins des bases de données (BD) est de type relationnel.

21. Procédé selon l'une des revendications 15 à 20, **caractérisé en ce que** lesdites données primaires définissent des objets, et **en ce que** lesdits ensembles de persistance sont des classes d'objets.

## Claims

1. A device (D) for the management of data persistency in an equipment management system (EMS) of a communication network (N) that includes a large variety of network equipment (NE-i), where the said equipment management system (EMS) is coupled to the said equipment (NE-i) and to a network management system (NMS), and includes a management information tree (MIT) which is coupled to the said device (D), representing links between the equipment (NE-i), and which includes primary data, **characterized in that** it includes configurable conversion resources (MTR) which are arranged so as to convert at least some of the said primary data into persistent data in accordance with persistency models, each of which is associated with different storage media (FP, BD), with a view to their storage in the storage medium associated with the persistency model that has been used for their conversion, and that the said conversion resources (MTR) are arranged, after performing a conversion of primary data into persistent data, so as to generate a storage interface that is suitable for the storage of the said persistent data in the corresponding storage medium (FP, BD).

2. A device in accordance with claim 1, **characterized in that** the said conversion resources (MTR) are arranged so as to determine the association of the said primary data with selected persistency sets associated with the different persistency models, and then to convert these primary data into persistent data in accordance with the persistency model associated with the persistency set to which they belong.

3. A device in accordance with claim 1, **characterized in that** it is suitable to be controlled/monitored by equipment description resources (MEM) of the said equipment management system (EMS).

4. A device in accordance with claim 1, **characterized in that** the said conversion resources (MTR) are arranged so as to convert the said primary data into persistent data by the generation of data tables in the format of the corresponding storage medium (FP, BD).

5. A device in accordance with one of the claims 1 to 4, **characterized in that** the said storage interface is of the JDBC type.

6. A device in accordance with one of the claims 1 to 5, **characterized in that** the said conversion resources (MTR) are arranged so as to deliver persistent data that are matched to storage media selected from a group that includes at least flat files (FP) and databases (BD).

7. A device in accordance with claim 6, **characterized in that** at least one of the databases (BD) is of the relational type.

8. A device in accordance with one of the claims 1 to 7, **characterized in that** the said primary data describes objects, and **in that** the said persistency sets are object classes.

9. A device in accordance with one of the claims 1 to 8, **characterized in that** the said conversion resources (MTR) include at least one configuration file and at least one program code file.

10. A device in accordance with claim 9, **characterized in that** each configuration file is of the XML type.

11. A device in accordance with one of the claims 9 and 10, **characterized in that** the said program codes are in the Java language.

12. An equipment management system (EMS) for a communication network (N) that includes a large variety of network equipment (NE-i), and suitable to be coupled to the said equipment (NE-i) and to a network management system (NMS), and that includes a management information tree (MIT) representing links between equipment, and that includes primary data, **characterized in that** it includes a management device (D) in accordance with one of the preceding claims 1 to 11, coupled to the said management information tree (MIT) and to equipment description resources (MEM).

13. A management server (MS) in a network management system (NMS), **characterized in that** it includes an equipment management system (EMS) in accordance with claim 12.

14. Network equipment (NE-i), **characterized in that** it includes an equipment management system (EMS) in accordance with claim 12.

15. A method for the management of data persistency for a communication network (N) that includes a large variety of network equipment (NE-ij), and a network management system (NMS) coupled to an equipment management system (EMS) coupled to the said equipment (NE-i), representing links between equipment, and that includes a management information tree (MIT) that includes primary data, **characterized in that** it consists of converting at least some of the said primary data into persistent data in accordance with persistency models, each of which is associated with different storage media (FP, BD), with the aim of storing them in the storage medium associated with the persistency model that has been used for their conversion, and that after performing a conversion of primary data into persistent data, a storage interface is generated that is suitable for the storage of the said persistent data in the corresponding storage medium (FP, BD).

16. A method in accordance with claim 15, **characterized in that** the association of the said primary data to selected persistency sets associated with the different persistency models is determined, and then these primary data are converted into persistent data in accordance with the persistency model associated with the persistency set to which they belong.

17. A method in accordance with one of the claims 15 and 16, **characterized in that** the said primary data are converted into persistent data by the generation of data tables in the format of the corresponding storage medium.

18. A method in accordance with claim 15, **characterized in that** a storage interface of the JDBC type is generated,

19. A method in accordance with one of the claims 15 to 18, **characterized in that** persistent data is delivered which is matched to storage media selected from a group that includes at least flat files (FP) and databases (BD).

20. A method in accordance with claim 19, **characterized in that** at least one of the databases (BD) is of the relational type.

21. A method in accordance with one of the claims 15 to 20, **characterized in that** the said primary data describes objects, and **in that** the said persistency sets are object classes.

## Patentansprüche

1. Vorrichtung (D) zur Persistenzverwaltung von Daten für ein System zur Verwaltung von Einrichtungen (EMS) eines Kommunikationsnetzes (N), das eine Vielzahl von Netzeinrichtungen (NE-i) einschließt, wobei dieses System zur Verwaltung von Einrichtungen (EMS) an diese Einrichtungen (NE-i) und an ein Netzverwaltungssystem (NMS) gekoppelt ist, und einen Baum Verwaltungsinformationen (MIT) einschließt, der an diese Vorrichtung (D) gekoppelt ist, für Verbindungen zwischen Einrichtungen (NE-i) steht und primäre Daten enthält, **dadurch gekennzeichnet, dass** sie konfigurierbare Mittel zur Umwandlung (MTR) einschließt, die so aufgebaut sind, dass zumindest einige dieser primären Daten in persistente Daten umgewandelt werden, in Abhängigkeit von Persistenzmodellen, die jeweils mit unterschiedlichen Speichermitteln (FP, BD) verknüpft sind, und **dadurch gekennzeichnet, dass** diese Mittel zur Umwandlung (MTR) so aufgebaut sind, dass sie nach erfolgter Umwandlung von primären Daten in persistente Daten eine Speicherschnittstelle generieren, die für die Speicherung dieser persistenten Daten im entsprechenden Speichermittel (FP, BD) passend sind.

2. Vorrichtung gemäß Anspruch 1, **dadurch gekennzeichnet, dass** diese Mittel zur Umwandlung (MTR) so aufgebaut sind, dass sie die Zugehörigkeit dieser primären Daten zu gewählten Persistenzkomplexen ermitteln, die mit den verschiedenen Persistenzmodellen verknüpft sind, dann diese primären Daten abhängig vom Persistenzmodell, das mit dem Persistenzkomplex verknüpft ist, zu dem sie gehören, in persistent Daten umwandeln.

3. Vorrichtung gemäß Anspruch 1 oder Anspruch 2, **dadurch gekennzeichnet, dass** sie durch Mittel zur Beschreibung von Einrichtungen (MEM) dieses Systems zur Verwaltung von Einrichtungen (EMS) gesteuert werden kann.

4. Vorrichtung gemäß einem der Ansprüche 1 bis 3, **dadurch gekennzeichnet, dass** diese Mittel zur Umwandlung (MTR) so aufgebaut sind, dass sie durch Generierung von Datentabellen im Format des entsprechenden Speichermittels (FP, BD) diese primären Daten in persistente Daten umwandeln.

5. Vorrichtung gemäß einem der Ansprüche 1 bis 4, **dadurch gekennzeichnet, dass** diese Speicherschnittstelle eine JDBC-Schnittstelle ist.

6. Vorrichtung gemäß einem der Ansprüche 1 bis 5, **dadurch gekennzeichnet, dass** diese Mittel zur Umwandlung (MTR) so aufgebaut sind, dass sie persistente Daten erstellen, die an Speichermittel angepasst sind, welche gewählt werden aus einer Gruppe, die mindestens Textdateien (FP) und Datenbanken (BD) einschließt.

7. Vorrichtung gemäß Anspruch 6, **dadurch gekennzeichnet, dass** zumindest eine der Datenbanken (BD) eine relationale Datenbank ist.

8. Vorrichtung gemäß einem der Ansprüche 1 bis 7, **dadurch gekennzeichnet, dass** diese primären Daten Objekte definieren, und **dadurch gekennzeichnet, dass** diese Persistenzkomplexe Objektklassen sind.

9. Vorrichtung gemäß einem der Ansprüche 1 bis 8, **dadurch gekennzeichnet, dass** diese Mittel zur Umwandlung (MTR) mindestens eine Konfigurationsdatei und mindestens eine Programmcodedatei einschließen.

10. Vorrichtung gemäß Anspruch 9, **dadurch gekennzeichnet, dass** jede Konfigurationsdatei eine XML-Datei ist.

11. Vorrichtung gemäß einem der Ansprüche 9 und 10, **dadurch gekennzeichnet, dass** diese Programmcodes in der Sprache Java sind.

12. System zur Verwaltung von Einrichtungen (EMS) für ein Kommunikationsnetz (N), das eine Vielzahl von Netzeinrichtungen (NE-i) einschließt, und an diese Einrichtungen (NE-i) gekoppelt werden kann und an ein Netzverwaltungssystem (NMS), und einen Baum Verwaltungsinformationen (MIT) einschließt, der für Verbindungen zwischen Einrichtungen steht und primäre Daten enthält, **dadurch gekennzeichnet, dass** es eine Verwaltungsvorrichlung (D) gemäß einem der vorstehenden Ansprüche 1 bis 11 einschließt, die an diesen Baum Verwaltungsinformationen (MIT) und an Mittel zur Beschreibung von Einrichtungen (MEM) gekoppelt ist.

13. Verwaltungsserver (MS) eines Netzverwaltungssystems (NMS), **dadurch gekennzeichnet, dass** er ein System zur Verwaltung von Einrichtungen (EMS) gemäß Anspruch 12 einschließt.

14. Netzeinrichtung (NE-i), **dadurch gekennzeichnet, dass** sie ein System zur Verwaltung von Einrichtungen (EMS) gemäß Anspruch 12 einschließt.

15. Verfahren zur PersistenKverwaltung von Daten für ein Kommunikationsnetz (N), das eine Vielzahl von Netzeinrichtungen (NE-i) einschließt, und ein Netzverwaltungssystem (NMS), das gekoppelt ist an ein System zur Verwaltung von Einrichtungen (EMS), welches an diese Einrichtungen (NE-i) gekoppelt ist, und für Verbindungen zwischen Einrichtungen steht und einen Baum Verwaltungsinformationen (MIT) einschließt, der primäre Daten enthält, **dadurch gekennzeichnet, dass** es darin besteht, zumindest einige dieser primären Daten in persistente Daten umzuwandeln, in Abhängigkeit von Persistenzmodellen, die jeweils mit unterschiedlichen Speichermitteln (FP, BD) verknüpft sind, im Hinblick auf ihre Abspeicherung in dem Speichermittel, das mit dem Persistenzmodell verknüpft ist, das zu ihrer Umwandlung gedient hat, und **dadurch gekennzeichnet, dass** man nach erfolgter Umwandlung von primären Daten in persistente Daten eine Speicherschnittstelle generiert, die für die Speicherung dieser persistenten Daten im entsprechenden Speichermittel (FP, BD) passend ist.

16. Verfahren gemäß Anspruch 15, **dadurch gekennzeichnet, dass** man die Zugehörigkeit dieser primären Daten zu gewählten Persistenzkomplexen ermittelt, die mit den verschiedenen Persistenzmodellen verknüpft sind, man dann diese primären Daten abhängig von dem Persistenzmodell, das mit dem Persistenzkomplex, zu dem sie gehören, verknüpft ist, in persistente Daten umwandelt.

17. Verfahren gemäß einem der Ansprüche 15 und 16, **dadurch gekennzeichnet, dass** man diese primären Daten durch Generierung von Datentabellen im Format des entsprechenden Speichermittels in persistente Daten umwandelt.

18. Verfahren gemäß Anspruch 15, **dadurch gekennzeichnet, dass** man eine Speicherschnittstelle vom Typ JDBC generiert.

19. Verfahren gemäß einem der Ansprüche 15 bis 18, **dadurch gekennzeichnet, dass** man persistente Daten erstellt, die an Speichermittel angepasst sind, welche gewählt werden aus einer Gruppe, die mindestens Textidateien (FP) und Datenbanken (BD) einschließt.

20. Verfahren gemäß Anspruch 19, **dadurch gekennzeichnet, dass** mindestens eine der Datenbanken (BD) eine relationale Datenbank ist.

21. Verfahren gemäß einem der Ansprüche 15 bis 20, **dadurch gekennzeichnet, dass** diese primären Daten Objekte definieren, und **dadurch gekennzeichnet, dass** diese Persistenzkomplexe Objektklassen sind.
